# EUROPÄISCHE PATENTSCHRIFT

(11) **EP 3 097 764 B1**
(45) Veröffentlichungstag und Bekanntmachung des Hinweises auf die Patenterteilung: **04.07.2018**
(21) Anmeldenummer: 16170945.6
(22) Anmeldetag: 24.05.2016
(51) Int. Cl.: A01G 1/04

(54) **SYSTEM ZUR KULTIVIERUNG UND ERNTE VON PILZEN**
SYSTEM FOR CULTIVATION AND HARVESTING OF MUSHROOMS
SYSTÈME DE CULTURE ET DE RÉCOLTE DE CHAMPIGNONS

(30) Priorität: 26.05.2015 DE 102015108250
(43) Veröffentlichungstag der Anmeldung: 30.11.2016
(73) Patentinhaber: Pilzkulturen Wesjohann GbR, 49429 Visbek (DE)
(72) Erfinder: VOGT, Christian, 49393 Lohne (DE); KRUSE, Torben, 49685 Emstek (DE)
(74) Vertreter: Isfort, Olaf

(56) Entgegenhaltungen:
- EP-A1- 1 810 563
- EP-A2- 1 064 836
- WO-A1-93/00793
- WO-A1-2012/110238

## Beschreibung

Die Erfindung betrifft ein System zur Kultivierung und Ernte von Pilzen.

Allgemein ist es bekannt, dass Pilze in klimatisierten und je nach Pilzart in abgedunkelten oder hellen Räumen gezüchtet werden. Die auf einem Substrat, wachsenden Pilze sind dabei bevorzugt in mehreren Ebenen übereinander auf Stellagen in Beeten angeordnet. Das Substrat weist dabei eine auf die Pilzart abgestimmte Zusammensetzung auf. Nachdem die Pilze eine bestimmte Größe erreicht haben, werden sie in regelmäßigen Abständen manuell abgeerntet.

Aus der EP 1 064 836 A2 ist beispielsweise bekannt, dass das Ernten mittels einer an der Stellage beweglich angeordneten Gondel erfolgt. Mit Hilfe der Gondel wird jeder einzelne Pilz von einer auf der Gondel stehenden Person manuell gepflückt. Die Gondel ist dabei bevorzugt entlang der Stellage horizontal verfahrbar.

Die EP 1 810 563 A1 betrifft eine Vorrichtung zum Ernten von Pilzen, umfassend eine Personenbeförderungsvorrichtung, welche einen Pilzsammler in Bezug auf ein Pflanzbeet transportiert.

Die WO 93/00793 A1 betrifft eine Vorrichtung zur automatischen selektiven Ernte von Pilzen.

Aus der WO 2012/110238 A1 ist ferner ein System zum Ernten von Pilzen bekannt, das eine Überführungsvorrichtung aufweist, mittels der die Pilze von der mehretagigen Stellage auf ein Pflückgestell überführt werden. Auf den Pflückgestellen befinden sich die Pilze in einer Ebene, die so ausgebildet ist, dass sich die Pilze leicht von den neben dem Pflückgestell stehenden Pflückerinnen pflücken lassen.
Nachteilig an den bekannten Systemen ist es, dass sich damit nur relativ geringe Pflückleistungen erzielen lassen. Unter Pflückleistung versteht man die Menge von Pilzen, die pro Zeiteinheit geerntet werden. Im Pilzanbau machen die Pflückkosten den größten Anteil der Produktionskosten aus, so dass ein Bedarf an Systemen besteht, die eine Erhöhung der Pflückleistung ermöglichen.
Es ist daher Aufgabe der Erfindung, ein verbessertes System zur Kultivierung und Ernte von Pilzen bereitzustellen. Insbesondere soll die Pflückleistung erhöht und sollen die Pflückkosten reduziert werden. Gelöst wird diese Aufgabe durch ein System mit den Merkmalen des Anspruchs 1. Vorteilhafte Ausgestaltungen sind jeweils Gegenstand der abhängigen Ansprüche. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.
Das erfindungsgemäße System zur Kultivierung und Ernte von Pilzen umfasst wenigstens eine Stellage, wobei sich die auf einem Substrat wachsenden Pilze auf der Stellage in wenigstens zwei übereinander angeordneten Ebenen befinden, und wenigstens eine Pflückstation, die entlang der Stellage horizontal verfahrbar ist und mehrere Pflückplätze für die die Pilze erntenden Personen aufweist. Das System zeichnet sich dadurch aus, dass jeder Pflückplatz einer bestimmten, unterschiedlichen Ebene zugeordnet ist, so dass die Pilze auf unterschiedlichen Ebenen der Stellage gleichzeitig aberntbar sind.
Das erfindungsgemäße System weist gegenüber dem Stand der Technik den Vorteil auf, dass durch die mehreren an der Pflückstation angeordneten Pflückplätze die Pilze auf den unterschiedlichen Ebenen der Stellage gleichzeitig geerntet werden können. Hierdurch kann die Pflückleistung wesentlich erhöht werden, so dass die Kosten insgesamt gesenkt werden.

Unter Pflückplätzen sind diejenigen Positionen zu verstehen, an denen die die Pilze erntenden Personen stehen und die erntereifen Pilze pflücken. Die Pflückplätze können eine Waage zum Auswiegen der Pilze und/oder eine fixierte Klinge zum Abtrennen der Stengelenden der Pilze aufweisen. In der Regel werden die Pilze unmittelbar in Behälter gelegt, in denen sie später dann auch in den Handel gelangen. Durch die Waage können die Pflückerinnen dafür Sorge tragen, dass jeder Behälter das korrekte Füllgewicht aufweist. Das Abtrennen der Stengelenden gehört zum Erntevorgang dazu und ist für die Qualität des Endprodukts unerlässlich. Die fixierte Klinge ermöglicht es, dass die Pflückerinnen mit beiden Händen pflücken können und den Stengel einfach durch das Führen des Pilzes über die Klinge abtrennen.

Dass jeder Pflückplatz einer unterschiedlichen Ebene zugeordnet ist, ist erfindungsgemäß dahingehend zu verstehen, dass jeder Pflückplatz einer bestimmten Ebene der Stellage zugeordnet ist. Beim Vorhandensein von zwei Pflückplätzen ist beispielsweise der erste Pflückplatz einer ersten Ebene der Stellage und der zweite Pflückplatz einer zweiten Ebene der Stellage zugeordnet ist. Vorteilhafterweise entspricht die Anzahl der Pflückplätze einer Pflückstation genau der Anzahl der Ebenen der Stellage. Durch eine derartige Anordnung können alle Ebenen der Stellage gleichzeitig abgeerntet werden, so dass bei einem einmaligen horizontalen Entlangfahren der Pflückstation an der Stellage, die Stellage komplett abgeerntet wird.

Bevorzugt weist die Pflückstation eine Pflückbrücke zur Aufnahme einer die Pilze erntenden Person auf, die beabstandet vom Boden angeordnet ist. Durch die Pflückbrücke steht die erntende Person relativ zu den auf der betreffenden Ebene angeordneten Pilzen in einer geeigneten Arbeitshöhe. Die erntende Person befindet sich somit in einer gegenüber dem Boden erhöhten Position, so dass sie an die z.B. auf einer oberen Ebene der Stellage befindlichen Pilze leicht herankommt und diese effektiv abernten kann. Mit oberer Ebene ist erfindungsgemäß eine Ebene gemeint, zwischen der und dem Boden wenigstens eine weitere Ebene der Stellage angeordnet ist. Damit die Pflückbrücke leicht betretbar ist, kann die Pflückbrücke Sprossen oder stufenförmige Elemente aufweisen.

Die Pflückbrücke kann eine Plattform aufweisen, auf der die erntende Person steht. Es ist aber auch denkbar, dass die Pflückbrücke podestartig ausgebildet ist.

Denkbar ist auch, dass die Pflückbrücke vertikal verfahrbar ist. Hierdurch kann die zu pflückende Person bequem ebenerdig auf die Pflückbrücke auftreten und sich dann bevorzugt durch Betätigen einer Antriebseinheit nach oben fahren lassen und sich in eine optimale Position relativ zur den zu erntenden Pilzen bringen. Nach Beendigung des Erntevorgangs kann sich die Person dann wieder nach unten befördern lassen und bequem ebenerdig die Pflückbrücke verlassen. Die Antriebseinheit kann sowohl motorisch wie auch hydraulisch angetrieben werden. Grundsätzlich ist aber auch denkbar, dass die Pflückbrücke manuell mittels einer Handkurbel oder dergleichen auf und ab bewegbar ist.

Vorteilhafterweise weist die Stellage genau zwei übereinander angeordnete Ebenen, eine erste und eine zweite Ebene auf. Die Aberntung der Pilze der ersten Ebene kann dabei bevorzugt durch einen ersten Pflückplatz und die Aberntung der Pilze der zweiten Ebene kann bevorzugt durch einen zweiten Pflückplatz durchgeführt werden. Idealerweise weist das System mehrere, im Wesentlichen parallel zueinander angeordnete Stellagen auf. Um ein möglichst effizientes Ernten der Pilze sicherstellen zu können, ist jeder Stellage wenigstens eine Pflückstation mit einer Mehrzahl an Pflückplätzen zugeordnet.

Das erfindungsgemäße System kann bevorzugt wenigstens einen Querförderer umfassen, der eine Förderrichtung quer zur Längserstreckung der Stellage aufweist. Die die Pilze erntenden Personen pflücken die Pilze und legen diese (bevorzugt in einem Behälter) auf den Querförderer, der die Pilze dann direkt zur weiteren Verarbeitung transportiert. Der Querförderer kann als Bandförderer ausgebildet sein. Weist das System mehrere nebeneinander angeordnete Stellagen auf, dann kann der Querförderer die Stellagen überspannen. Idealerweise kann der Querförderer mit einer variablen Geschwindigkeit quer zu seiner Förderrichtung motorisch beweglich sein. Hierdurch wird eine Anpassung an die Pflückgeschwindigkeit der Pflückerinnen ermöglicht. Befinden sich noch viele Pilze auf dem Substrat, dann wird das Substrat langsamer abgeerntet und der Querförderer bewegt sich mit einer langsameren Geschwindigkeit entlang der Stellagen. Weist das Substrat nur wenige Pilze auf, dann kann die Bewegung des Querförderers schneller erfolgen.

Vorteilhafterweise weist der Querförderer zwei Transportebenen zum Transportieren der geernteten Pilze auf. Die Ebenen liegen bevorzugt direkt untereinander. Es ist aber auch möglich, dass die untereinander liegenden Transportebenen des Querförderers versetzt nebeneinander angeordnet sind. Idealerweise ist die eine Ebene einem ersten Pflückplatz und die zweite Ebene einem zweiten Pflückplatz zugeordnet.

Die Pflückplätze können auf sich gegenüberliegenden Seiten des Querförderers angeordnet sein. Dies bietet den Vorteil, dass sich der Querförderer von den Pflückplätzen gleich gut bestücken lässt. Idealerweise sind die Pflückstation und damit auch die Pflückplätze fest an dem Querförderer befestigt, so dass der Querförderer und die Pflückplätze gemeinsam entlang der Stellage und damit entlang der Pilzbeete verfahrbar sind. Wird der Querförderer horizontal verfahren, dann bewegen sich die die Pilze erntenden Personen mit, so dass sukzessive das gesamte auf den Ebenen der Stellage befindliche Substrat abgeerntet werden kann. Hierdurch können die abgeernteten Pilze unmittelbar auf den Querförderer abgelegt werden, so dass diese zu einem zentralen Ort gefördert werden und weiterverarbeitet werden können.

Das erfindungsgemäße System kann ferner ein Rahmengestell zur Aufnahme des Querförderers aufweisen. Das Rahmengestell verläuft im Wesentlichen parallel zur Stellage und weist bevorzugt eine Tragschiene auf. Die Tragschiene ist so ausgebildet, dass der Querförderer entlang dieser verfahrbar ist. Hierzu weist der Querförderer bevorzugt Laufrollen auf, die auf der Tragschiene angeordnet sind. Idealerweise ist der Querförderer an beiden Enden auf einem Rahmengestell verfahrbar angeordnet.

Bevorzugt weist das erfindungsgemäße System eine Fördereinheit auf, die die gepflückten Pilze in vertikaler Richtung, bevorzugt zum Querförderer transportiert und die Pilze dann idealerweise auch auf dem Querförderer ablegt. Die Fördereinheit erstreckt sich dabei bevorzugt von einem einer unteren Ebene der Stellage zugeordneten Pflückplatz bis zu dem Querförderer, der oberhalb der Stellage angeordnet ist. Bei der Fördereinheit handelt es sich idealerweise um eine Art Aufzug. Die Fördereinheit kann ein Traggestell aufweisen, in denen die geernteten Pilze bzw. Behälter angeordnet werden können, wobei diese dann in vertikaler Richtung, bevorzugt nach oben, transportiert werden. Die Fördereinheit kann Plattformen aufweisen, auf denen die Pilze bzw. Behälter abgestellt werden können. Die Fördereinheit kann aber auch so ausgebildet sein, dass sich Behälter in diese einhängen bzw. einhaken lassen.

Das System kann einen Längsförderer umfassen. Der Längsförderer, beispielsweise ein Bandförderer, weist bevorzugt eine Förderrichtung parallel zur Längserstreckung der Stellage und bereichsweise zwei Förderbänder auf.

Der Längsförderer kann in mehrere Bereiche, idealerweise in drei Bereiche unterteilt sein. In einem ersten Bereich weist der Längsförderer bevorzugt zwei Förderebenen auf, wobei die Förderebenen den Förderebenen des Querförderers zugeordnet sind, so dass eine erste Förderebene des Längsförderers einer ersten Ebene des Querförderers und eine zweite Ebene des Längsförderers einer zweiten Ebene des Querförderers zugeordnet ist. Die auf der ersten Ebene des Querförderers angeordneten Behälter bzw. Pilze werden somit auf die erste Ebene des Längsförderers befördert. Die Förderebenen des Längsförderers verlaufen dabei insbesondere auf parallel zueinander liegenden Ebenen und sind versetzt zueinander angeordnet. Ein zweiter Bereich des Längsförderers kann als Übergangsbereich ausgebildet sein. Im Übergangsbereich wird der Längsförderer von einer Ausgestaltung mit zwei Ebenen in eine Ausgestaltung mit einer Ebene überführt. Hierzu weisen die einzelnen Förderbänder des Längsförderers bevorzugt unterschiedlich starke Steigungen/Neigungen auf. Ein dritter Bereich weist bevorzugt nur noch eine Ebene auf. Die auf den unterschiedlichen Ebenen transportierten Behälter laufen hier zusammen. Grundsätzlich ist es aber auch denkbar, dass der Längsförderer lediglich einen Übergangsbereich aufweist, also einen Bereich in dem der Längsförderer von der Ausgestaltung mit einer Ebene in eine Ausgestaltung mit zwei Ebenen überführt wird. Hierzu weist der Längsförderer zwei Transportbänder auf, die eine unterschiedlich starke Neigung aufweisen.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen. Die Erfindung ist jedoch nicht auf die gezeigte Ausführungsvariante beschränkt. Insbesondere umfasst die Erfindung, soweit es technisch sinnvoll ist, beliebige Kombinationen der technischen Merkmale, die in den Ansprüchen aufgeführt oder in der Beschreibung als erfindungsrelevant beschrieben sind.

Es zeigen:
- Fig. 1: schematische Seitenansicht eines erfindungsgemäßen System sin einer ersten Ausgestaltung,
- Fig. 2: das in Figur 1 gezeigte System in einer perspektivischen Ansicht,
- Fig. 3: das in Figur 1 gezeigte System in einer weiteren perspektivischen Ansicht,
- Fig. 4: perspektivische Ansicht eines erfindungsgemäßen Systems in einer weiteren Ausgestaltung.

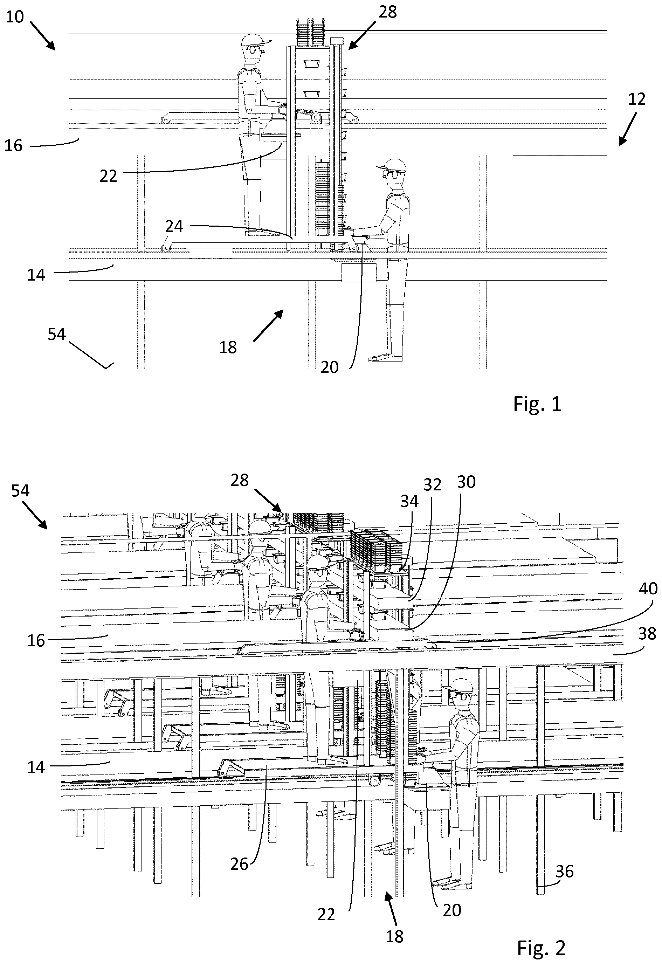

Figur 1 zeigt eine schematische Seitenansicht eines erfindungsgemäßen Systems 10 zur Kultivierung und Ernte von Pilzen in einer ersten Ausgestaltung. Das System 10 weist eine Stellage 12 mit zwei übereinander angeordneten Ebenen 14, 16 auf. Auf den Ebenen 14, 16 ist ein Substrat angeordnet, auf dem Pilze wachsen. Ferner weist das System 10 eine Pflückstation 18 auf, die entlang der Stellage 12 verfahrbar ist. Die Pflückstation 18 umfasst zwei Pflückplätze 20, 22 für jeweils mindestens eine Person zum Ernten der Pilze. Jeder Pflückplatz 20, 22 ist einer anderen Ebene 14, 16 der Stellage 12 zugeordnet, so dass die Pilze auf den unterschiedlichen Ebenen 14, 16 der Stellage 12 gleichzeitig abgeerntet werden können. In Figur 1 ist der erste Pflückplatz 20 der unteren Ebene 14 und der zweite Pflückplatz 22 der oberen Ebene 16 zugeordnet.

Der zweite Pflückplatz ist als Pflückbrücke 24 zur Aufnahme einer die Pilze erntenden Person ausgebildet. Die Pflückbrücke 24 ist vom Boden 54 beabstandet und dient dazu, dass die auf den oberen Ebenen 16 bzw. der oberen Ebene 16 der Stellage 12 befindlichen Pilze geerntet werden können. Durch die Pflückbrücke 24 befindet sich die zu erntende Person in einer gegenüber dem Boden 54 erhöhten Position, so dass sie an die auf der oberen Ebene 16 befindlichen Pilze leicht herankommt und diese abernten kann. Die Pflückbrücke 24 kann eine Plattform 26 aufweisen, auf der die Person steht. Damit die Pflückbrücke 24 leicht zu betreten ist, kann die Pflückbrücke 24 Sprossen oder stufenförmige Elemente aufweisen. Denkbar ist auch, dass die Pflückbrücke 24 vertikal verfahrbar ist. Hierdurch kann die pflückende Person bequem ebenerdig auf die Pflückbrücke 24 treten und sich dann bevorzugt durch Betätigen einer Antriebseinheit nach oben fahren lassen und sich in eine optimale Position relativ zur den zu erntenden Pilzen ausrichten.

Das in Figur 1 dargestellte System 10 umfasst ferner einen Querförderer 28, der als Bandförderer ausgebildet ist und sich oberhalb der Stellage 12 erstreckt. Der Querförderer 28 weist eine Förderrichtung quer zur Längserstreckung der Stellage 12 auf. Weist das System 10 eine Vielzahl an Stellagen 12 auf, die bevorzugt voneinander beabstandet angeordnet sind und im Wesentlichen parallel zueinander verlaufen, dann überspannt der Querförderer 28 bevorzugt mehrere nebeneinander angeordnete Stellagen 12. Bevorzugt sind die Pflückplätze 20, 22 auf sich gegenüberliegenden Seiten des Querförderers 28 angeordnet.

Figur 2 zeigt das in Figur 1 dargestellte System 10 in einer perspektivischen Ansicht. Der Querförderer 28 weist zwei Ebenen 30, 32 zum Transportieren der geernteten Pilze auf. An dem Querförderer 28, bevorzugt oberhalb des Querförderers 28, kann eine Ablage 34 für Behälter angeordnet sein. Bevorzugt werden die gepflückten Pilze an den Pflückplätzen 20, 22 direkt in Behälter gelegt, in denen die Pilze später dann auch in den Handel gelangen. Um das korrekte Füllgewicht bestimmen zu können, weist jeder Pflückplatz 20, 22 bevorzugt eine Waage auf. Die erntende Person nimmt einen Behälter von der Ablage 34 und füllt diesen solange, bis er das notwendige Gewicht hat und stellt in dann auf den Querförderer 28, der die Pilze dann zur weiteren Verarbeitung wegtransportiert.

Ferner ist in Figur 2 ein Rahmengestell 36 dargestellt, dass zur Aufnahme des Querförderers 28 dient und im Wesentlichen parallel zur Stellage 12 verläuft. Das Rahmengestell 36 weist eine Tragschiene 38 auf, entlang der der Querförderer 28 verfahrbar angeordnet ist. Der Querförderer 28 weist bevorzugt Laufrollen 40 auf, die an der Tragschiene 38 angreifen. Idealerweise ist der Querförderer an beiden Enden auf jeweils einer Tragschiene 38 bzw. einem Rahmengestell 34 angeordnet. Die Pflückstation 18 mit den zwei Pflückplätzen 20, 22 ist an dem Querförderer 28 fest befestigt. Dies hat den Vorteil, dass der Querförderer 28 und die Pflückplätze 20, 22 gemeinsam entlang der Stellage 12 und damit entlang der Pilzbeete verfahrbar sind. Die erntenden Personen können somit die geernteten Pilze unmittelbar auf den Querförderer 28 ablegen, so dass diese zu einem zentralen Ort gefördert werden und weiterverarbeitet werden können.

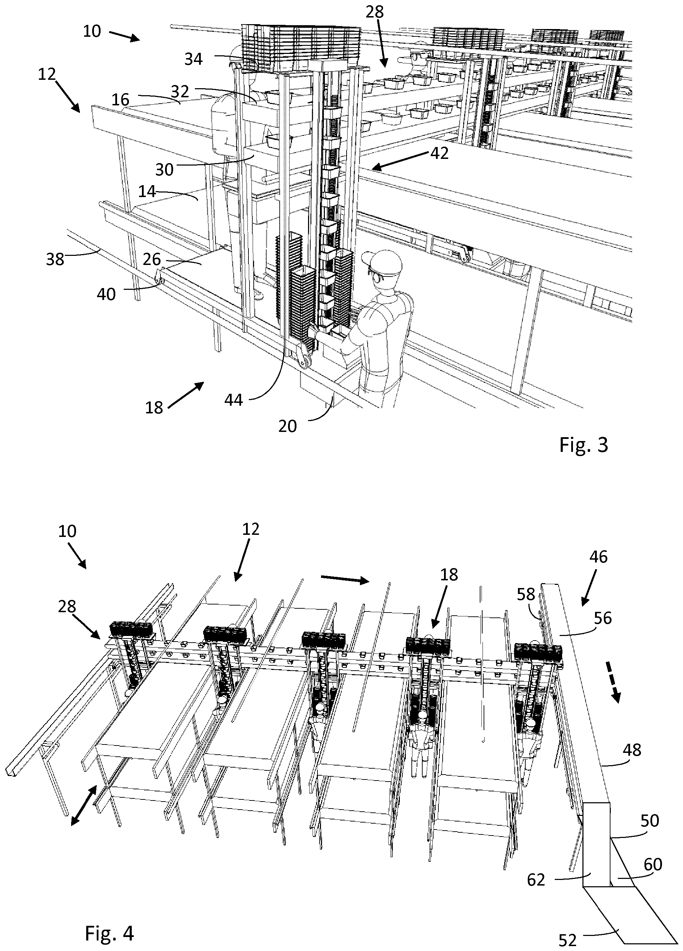

Figur 3 zeigt das in Figur 1 gezeigte System 10 in einer weiteren perspektivischen Ansicht. Der erste Pflückplatz 20 der Pflückstation 18 ist der unteren Ebene 14 der Stellage 12 zugeordnet. Damit die geernteten und in die Behälter gefüllten Pilze vom Pflückplatz 20 abtransportiert werden können und dort Platz für weitere Pilze ist, weist die Pflückstation 18 eine Fördereinheit 42 auf. Die Fördereinheit 42 erstreckt sich von dem ersten Pflückplatz 20 vertikal zum Querförderer 28 und ist so ausgebildet, dass es die Behälter mit Pilzen zum Querförderer 28 transportiert und sie dann auf den Querförderer 28 auch ablegt. Die Fördereinheit 42 weist hierzu ein Traggestell 44 auf, in das die Behälter beispielsweise eingehängt werden können und dann vertikal nach oben bewegt werden. Bei der Fördereinheit 42 handelt es sich bevorzugt um eine Art Lift.

Figur 4 zeigt eine perspektivische Ansicht auf ein erfindungsgemäßes System 10 in einer weiteren Ausgestaltung. Das System 10 zur Kultivierung von Pilzen weist vier beabstandet und parallel zueinander angeordnete Stellagen 12 auf, die jeweils zwei Ebenen 14, 16 aufweisen, auf denen Pilze wachsen. An den Längsseiten der Stellagen 12 ist jeweils eine Pflückstation 18 verfahrbar angeordnet. Die Pflückstationen 18 weisen jeweils zwei Pflückplätze 20, 22 auf, wobei jeder Pflückplatz 20, 22 einer Ebene 14, 16 der Stellage 12 zugeordnet ist. Ein Querförderer 28, der bevorzugt zwei Ebenen aufweist, verläuft im Wesentlichen senkrecht zu den Stellagen 12 und überspannt diese. Die Förderrichtung des Querförderers 28 ist quer zur Längserstreckung der Stellagen 12 (in Figur 4 durch den einfachen Pfeil dargestellt). Der Querförderer 28 ist ferner bevorzugt mit einer variablen Geschwindigkeit quer zu seiner Förderrichtung motorisch beweglich (in Fig. 4 durch den Doppelpfeil dargestellt). Die einzelnen Pflückstationen 18 sind an dem Querförderer 28 fest angeordnet, so dass diese zusammen mit dem Querförderer 28 entlang der Stellagen 12 verfahrbar sind.

Ferner umfasst das in Figur 4 dargestellte System 10 einen Längsförderer 46, der eine Förderrichtung parallel zur Längserstreckung der Stellage 12 aufweist (in Figur 4 durch den gestrichelten Pfeil dargestellt). Ferner umfasst der Längsförderer wenigstens bereichsweise zwei Transportbänder 60, 62. Der Querförderer 28 transportiert die Pilze von den Stellagen 12 zum Längsförderer 46 und dieser fördert die Pilze dann zu einem zentralen Ort. Bevorzugt weist der Längsförderer 46 mehrere Bereiche 48, 50, 52 auf. In dem ersten Bereich 48 weist der Längsförderer 46 zwei Förderebenen 56, 58 auf. Diese Förderebenen 56, 58 entsprechen den Förderebenen 30, 32 des Querförderers 28. Die Förderebenen 56, 58 des Längsförderers 46 verlaufen auf parallel zueinander liegenden Ebenen und sind nicht, wie es bei dem Querförderer 28 der Fall ist untereinander, sondern nebeneinander angeordnet. Der zweite Bereich 50 ist als Übergangsbereich ausgebildet. Das bedeutet, dass der Längsförderer von einer Ausgestaltung mit zwei Ebenen in eine Ausgestaltung mit einer Ebende übergeht. Hierzu weisen die einzelnen Förderbänder 60, 62 des Längsförderers 46 unterschiedliche starke Steigungen auf. In seinem dritten Bereich 52 weist der Längsförderer 46 dann nur noch eine Ebene auf. Denkbar ist aber auch, dass der Längsförderer 46 lediglich einen Übergangsbereich 50 aufweist, also einen Bereich in dem der Längsförderer 46 von der Ausgestaltung mit zwei Ebenen in eine Ausgestaltung mit einer Ebene übergeht.

### Bezugszeichenliste

- 10: System zur Kultivierung und Ernte von Pilzen
- 12: Stellage
- 14: erste Ebene Stellage
- 16: zweite Ebene Stellage
- 18: Pflückstation
- 20: erster Pflückplatz
- 22: zweiter Pflückplatz
- 24: Pflückbrücke
- 26: Plattform
- 28: Querförderer
- 30: erste Ebene Querförderer
- 32: zweite Ebene Querförderer
- 34: Ablage Behälter
- 36: Rahmengestell
- 38: Tragschiene
- 40: Laufrolle
- 42: Fördereinheit
- 44: Traggestell
- 46: Längsförderer
- 48: erster Bereich Längsförderer
- 50: zweiter Bereich Längsförderer
- 52: dritter Bereich Längsförderer
- 54: Boden
- 56: erste Förderebene Längsförderer
- 58: zweite Förderebene Längsförderer
- 60: erstes Förderband Längsförderer
- 62: zweites Förderband Längsförderer

## Patentansprüche

1. System (10) zur Kultivierung und Ernte von Pilzen aufweisend:
- wenigstens eine Stellage (12), wobei die auf einem Substrat wachsenden Pilze auf der Stellage (12) in wenigstens zwei übereinander angeordneten Ebenen (14, 16) angeordnet sind, und
- wenigstens eine Pflückstation (18), die entlang der Stellage (12) horizontal verfahrbar ist und mehrere Pflückplätze (20, 22) für die Pilze erntenden Personen aufweist,
**dadurch gekennzeichnet, dass** jeder Pflückplatz (20, 22) einer bestimmten, unterschiedlichen Ebene (14, 16) zugeordnet ist, so dass die Pilze auf unterschiedlichen Ebenen (14, 16) der Stellage (12) gleichzeitig aberntbar sind.

2. System (10) nach Anspruch 1, **dadurch gekennzeichnet, dass** die Anzahl der Pflückplätze (20, 22) den Ebenen (14, 16) der Stellage (12) entsprechen.

3. System (10) nach einem der Ansprüche 1 oder 2, **dadurch gekennzeichnet, dass** die Pflückstation (18) eine Pflückbrücke (24) zur Aufnahme einer die Pilze erntenden Person aufweist, die beabstandet vom Boden (54) angeordnet ist.

4. System (10) nach dem vorangehenden Anspruch, **dadurch gekennzeichnet, dass** die Pflückbrücke (24) eine Plattform (26) aufweist, auf der die erntende Person steht.

5. System (10) nach einem der vorangehenden Ansprüche, **dadurch gekennzeichnet, dass** das System (10) mehrere, im Wesentlichen parallel zueinander angeordnete Stellagen (12) aufweist und jeder Stellage (12) wenigstens eine Pflückstation (18) zugeordnet ist.

6. System (10) nach einem der vorangehenden Ansprüche, **dadurch gekennzeichnet, dass** das System (10) wenigstens einen Querförderer (28) umfasst, der eine Förderrichtung quer zur Längserstreckung der Stellage (12) aufweist.

7. System (10) nach Anspruch 6, **dadurch gekennzeichnet, dass** der Querförderer (28) mit einer variablen Geschwindigkeit quer zu seiner Förderrichtung motorisch beweglich ist.

8. System (10) nach dem vorangehenden Anspruch, **dadurch gekennzeichnet, dass** der Querförderer (28) zwei Ebenen (28, 30) zum Transportieren der geernteten Pilze aufweist.

9. System (10) nach einem der Ansprüche 6 bis 8, **dadurch gekennzeichnet, dass** die Pflückplätze (20, 22) auf sich gegenüberliegenden Seiten des Querförderers (28) angeordnet sind.

10. System (10) nach einem der Ansprüche 6 bis 9, **dadurch gekennzeichnet, dass** die Pflückstation (18) und damit auch Pflückplätze (20, 22) fest an dem Querförderer (28) befestigt sind.

11. System (10) nach einem der Ansprüche 6 bis 10, **gekennzeichnet durch** eine Fördereinheit (42), die die gepflückten Pilze in vertikaler Richtung transportiert.

12. System (10) nach Anspruch 11, **dadurch gekennzeichnet, dass** die Fördereinheit (42) dazu ausgebildet ist, die gepflückten Pilze zum Querförderer (28) zu transportieren.

13. System (10) nach einem der Ansprüche 6 bis 12, **gekennzeichnet durch** einen Längsförderer (46), der eine Förderrichtung parallel zur Längserstreckung der Stellage (12) und bereichsweise zwei Förderbänder (60, 62) aufweist.

14. System (10) nach dem vorangehenden Anspruch, **dadurch gekennzeichnet, dass** der Längsförderer (46) drei Bereiche (48, 50, 52) aufweist, wobei der Längsförderer (46) in einem ersten Bereich (48) zwei Förderebenen, in einem zweiten Bereich (50) einen Übergangsbereich und in einem dritten Bereich (52) eine Förderebene aufweist.

## Claims

1. System (10) for the cultivation and harvesting of mushrooms, having:
- at least one rack (12), wherein the mushrooms growing on a substrate are arranged on the rack (12) on at least two levels (14, 16) arranged one above the other, and
- at least one picking station (18), which can be displaced horizontally along the rack (12) and has a plurality of picking locations (20, 22) for the people harvesting the mushrooms,
**characterized in that** each picking location (20, 22) is assigned to a certain, different level (14, 16), and it is therefore possible for the mushrooms on different levels (14, 16) of the rack (12) to be harvested at the same time.

2. System (10) according to Claim 1, **characterized in that** the number of picking locations (20, 22) corresponds to the levels (14, 16) in the rack (12).

3. System (10) according to either of Claims 1 and 2, **characterized in that** the picking station (18) has a picking bridge (24) for accommodating a mushroom-harvesting person who is at a distance from the floor (54) .

4. System (10) according to the preceding claim, **characterized in that** the picking bridge (24) has a platform (26) on which the person doing the harvesting stands.

5. System (10) according to one of the preceding claims, **characterized in that** the system (10) has a plurality of racks (12) arranged essentially parallel to one another, and each rack (12) is assigned at least one picking station (18).

6. System (10) according to one of the preceding claims, **characterized in that** the system (10) comprises at least one transverse conveyor (28), which has a conveying direction transverse to the longitudinal extent of the rack (12).

7. System (10) according to Claim 6, **characterized in that** the transverse conveyor (28) can be motor-driven at a variable speed in a direction transverse to its conveying direction.

8. System (10) according to the preceding claim, **characterized in that** the transverse conveyor (28) has two levels (28, 30) for transporting the harvested mushrooms.

9. System (10) according to one of Claims 6 to 8, **characterized in that** the picking locations (20, 22) are arranged on opposite sides of the transverse conveyor (28) .

10. System (10) according to one of Claims 6 to 9, **characterized in that** the picking station (18) and thus also picking locations (20, 22) are fixed on the transverse conveyor (28).

11. System (10) according to one of Claims 6 to 10, **characterized by** a conveying unit (42), which transports the picked mushrooms in the vertical direction.

12. System (10) according to Claim 11, **characterized in that** the conveying unit (42) is designed to transport the picked mushrooms to the transverse conveyor (28).

13. System (10) according to one of Claims 6 to 12, **characterized by** a longitudinal conveyor (46), which has a conveying direction parallel to the longitudinal extent of the rack (12) and, in some regions, has two conveyor belts (60, 62).

14. System (10) according to the preceding claim, **characterized in that** the longitudinal conveyor (46) has three regions (48, 50, 52), wherein the longitudinal conveyor (46), in a first region (48), has two conveying levels and, in a second region (50), has a transfer region and, in a third region (52), has one conveying level.

## Revendications

1. Système (10) de culture et de récolte de champignons, présentant :
- au moins une étagère (12), les champignons poussant sur un substrat étant disposés sur l'étagère (12) dans au moins deux plans disposés l'un au-dessus de l'autre (14, 16), et
- au moins un poste de cueillette (18) qui peut être déplacé horizontalement le long de l'étagère (12) et qui présente plusieurs emplacements de cueillette (20, 22) pour les personnes récoltant les champignons,
**caractérisé en ce que**
chaque emplacement de cueillette (20, 22) est associé à un plan déterminé différent (14, 16) de telle sorte que les champignons puissent être récoltés simultanément sur des plans différents (14, 16) de l'étagère (12).

2. Système (10) selon la revendication 1, **caractérisé en ce que** le nombre d'emplacements de cueillette (20, 22) correspond aux plans (14, 16) de l'étagère (12).

3. Système (10) selon l'une quelconque des revendications 1 ou 2, **caractérisé en ce que** le poste de cueillette (18) présente un pont de cueillette (24) pour recevoir une personne récoltant les champignons, lequel est disposé à distance du sol (54).

4. Système (10) selon la revendication précédente, **caractérisé en ce que** le pont de cueillette (24) présente une plate-forme (26) sur laquelle se tient la personne récoltant.

5. Système (10) selon l'une quelconque des revendications précédentes, **caractérisé en ce que** le système (10) présente plusieurs étagères (12) disposées essentiellement parallèlement les unes aux autres et au moins un poste de cueillette (18) est associé à chaque étagère (12).

6. Système (10) selon l'une quelconque des revendications précédentes, **caractérisé en ce que** le système (10) comprend au moins un convoyeur transversal (28) qui présente une direction de transport transversale à l'étendue longitudinale de l'étagère (12).

7. Système (10) selon la revendication 6, **caractérisé en ce que** le convoyeur transversal (28) peut être déplacé par un moteur avec une vitesse variable transversalement à sa direction de transport.

8. Système (10) selon la revendication précédente, **caractérisé en ce que** le convoyeur transversal (28) présente deux plans (28, 30) pour transporter les champignons récoltés.

9. Système (10) selon l'une quelconque des revendications 6 à 8, **caractérisé en ce que** les emplacements de cueillette (20, 22) sont disposés sur des côtés mutuellement opposés du convoyeur transversal (28).

10. Système (10) selon l'une quelconque des revendications 6 à 9, **caractérisé en ce que** le poste de cueillette (18) et par conséquent également les emplacements de cueillette (20, 22) sont fixés fermement au convoyeur transversal (28) .

11. Système (10) selon l'une quelconque des revendications 6 à 10, **caractérisé par** une unité de transport (42) qui transporte les champignons récoltés dans la direction verticale.

12. Système (10) selon la revendication 11, **caractérisé en ce que** l'unité de transport (42) est réalisée de manière à transporter les champignons récoltés vers le convoyeur transversal (28) .

13. Système (10) selon l'une quelconque des revendications 6 à 12, **caractérisé par** un convoyeur longitudinal (46) qui présente une direction de transport parallèle à l'étendue longitudinale de l'étagère (12) et dans certaines régions, deux bandes transporteuses (60, 62).

14. Système (10) selon la revendication précédente, **caractérisé en ce que** le convoyeur longitudinal (46) présente trois régions (48, 50, 52), le convoyeur longitudinal (46) présentant, dans une première région (48) deux plans de transport, dans une deuxième région (50) une région de transition et dans un troisième région (52) un plan de transport.
